# EUROPEAN PATENT APPLICATION

(11) **EP 1 832 779 A1**
(43) Date of publication of application: **12.09.2007**
(21) Application number: 07102797.3
(22) Date of filing: 21.02.2007
(51) Int. Cl.: F16D 63/00, F16H 3/12

(54) **Electrorheological inertia brake**

(30) Priority: 10.03.2006 US 372605
(71) Applicant: ZF FRIEDRICHSHAFEN AG, 88038 Friedrichshafen (DE)
(72) Inventor: Sayman, Robert Anthony, 88074 Meckenbeuren (DE); Muetzel, Ronald Peter, 88045 Friedrichshafen (DE); DeVore, James Henry, Metamora IL 61548-1041 (US)
(74) Representative: Zietlow, Karl-Peter

(57) **Abstract**

An electrorheological inertia brake (60) for a manual or automated mechanical transmission (20) provides improved control of the speed of input shafts (40) and countershafts (42A,42B) during shifts and extends the service life of the transmission. The electrorheological inertia brake includes a housing (62) defining a cavity (64) filled with electrorheological fluid (66). A shaft coupled to a transmission shaft extends into the cavity and includes vanes, paddles (92) or other drag increasing features. An electric current which may be of variable intensity is passed through the fluid to increase the viscosity, create drag and slow the associated transmission components.

## Description

### TECHNICAL FIELD

The invention relates generally to inertia brakes and more specifically to an electrorheological inertia brake for a manual or automated mechanical transmission.

### BACKGROUND

Due to their versatility and increasing sophistication, automated mechanical transmissions (AMTs) are fast becoming the transmission of choice for tractors of heavy duty, long haul tractor-trailer manufacturers and users. Both the mechanical transmissions themselves and the operating algorithms contained within their electronic controllers are the subjects and evidence of continual improvement and increasing capabilities.

Several basic operating criteria guide and direct such effort. One such criterion is the desire to accomplish a shift from a first gear ratio to a second gear ratio with an absolute minimum of time during which the master clutch is disengaged and thus the vehicle is without drive energy. Reducing or minimizing master clutch disengagement time during a gear shift improves both actual and perceived vehicle control increasing both vehicle performance and driver satisfaction.

In drivelines with automated mechanical transmission, it is essentially necessary for the engine/transmission/controller to perform their functions in a manner superior in all respects to that performance achieved by an operator in order to eliminate complaints. At the very least, relatively long clutch disengagement time during a shift will cause the vehicle to slow. With an automated mechanical transmission this may result in operator complaints.

In a particularly disadvantageous example, a tractor trailer may be accelerating up a grade and the transmission controller determines that an upshift is appropriate. The clutch is disengaged and the transmission actuators disengage the just utilized gear and attempt to engage the next selected gear. Typically in an upshift, until the transmission countershaft or countershafts slow the new gear cannot be engaged. If the ramp down of the countershaft and gear speeds is slow, the vehicle may have slowed to the point where the previously commanded upshift is no longer feasible or appropriate. When the countershaft and gears are finally turning at the proper speed, one of two scenarios are possible. In the first, the commanded upshift is completed. However, because the sensed engine/transmission parameters may be near an operating limit for the new gear, the time consuming gear selection and reengagement of the master clutch may necessitate an immediate downshift due to the speed and that speed lost during the shift. In the second, vehicle speed and other parameters may continue to drop as the transmission controller repeatedly attempts to select a lower gear (higher numerical reduction) to match the vehicle speed and the vehicle may actually cease forward motion before a gear can be and is successfully selected and engaged. Such behavior on behalf of the transmission and controller is unacceptable.

The foregoing example highlights the importance of rapid completion of a selected shift, particularly an upshift. This operational requirement implicates control of the countershaft or layshaft speeds to rapidly achieve synchronism in the newly selected gear in order to rapidly complete such gear selection and achieve the ultimate goal of minimum time of master clutch disengagement. The present invention is directed to achieving such control of the rotational speed of transmission input shafts, layshafts or countershafts.

### SUMMARY

An electrorheological inertia brake for a manual transmission or an automated mechanical transmission (AMT) provides improved control of the speed of input shafts, layshafts and countershafts and extends the service life of the transmission. The electrorheological inertia brake includes a housing defining a cavity filled with an electrorheological fluid, a shaft coupled to a transmission shaft extends into the cavity and includes blades, vanes, paddles or other drag increasing features. An electric current which may be of variable intensity is passed through the fluid to increase the viscosity, create drag and slow the associated transmission components as necessary to achieve synchronism and facilitate rapid shift completions. Additionally, the electrorheological inertia brake provides extended service life relative to conventional inertia brakes since it lacks friction disks which are subject to wear.

Thus it is an object of the present invention to provide an inertia brake for a manual transmission utilizing an electrorheological fluid.

Thus it is a further object of the present invention to provide an inertia brake for an automated mechanical transmission (AMT) utilizing an electrorheological fluid.

It is a still further object of the present invention to provide an input shaft, layshaft or countershaft inertia brake for a manual transmission using an electrorheological fluid.

It is a still further object of the present invention to provide an input shaft, layshaft or countershaft inertia brake for an automated mechanical transmission utilizing electrorheological fluid.

Further objects and advantages of the present invention will become apparent by reference to the following description of the preferred embodiment and appended drawings wherein like reference numbers refer to the same component, element or feature.

### BRIEF DESCRIPTION OF THE DRAWINGS

Figure 1 is a diagrammatic view of the powertrain of a typical truck tractor which incorporates the present invention;

Figure 2 is a full, sectional view of a multiple speed ratio heavy duty transmission incorporating an inertia brake according to the present invention; and

Figure 3 is an enlarged, full sectional view of an electrorheological inertia brake according to the present invention.

### DESCRIPTION

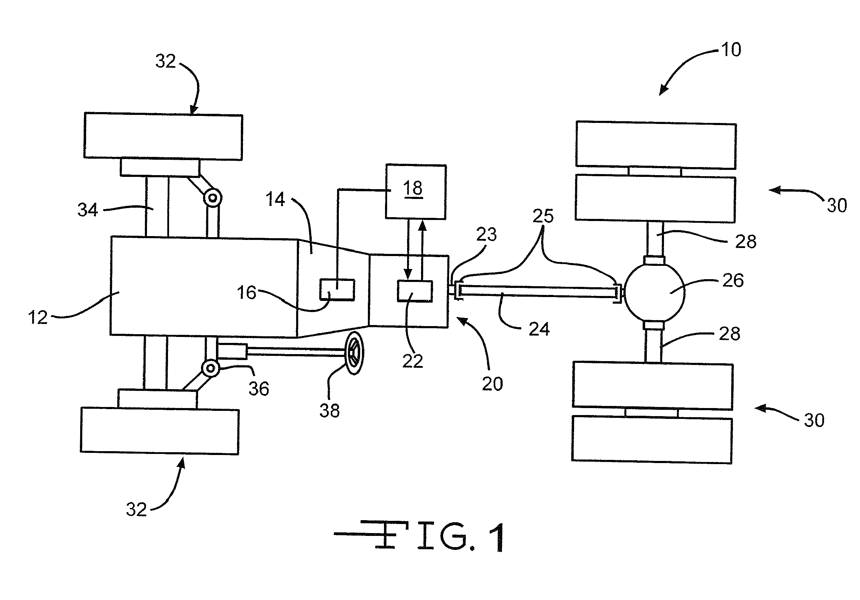

Referring now to Figure 1, a representative powertrain assembly of a heavy duty truck tractor is illustrated and generally designated by the reference number 10. The truck tractor powertrain assembly 10 includes a primer mover 12 which may be either a gasoline or Diesel internal combustion engine. The engine 12 will typically include a turbocharger or supercharger (not illustrated). The output of the primer mover 12 is coupled to a master friction clutch 14. The master friction clutch 14 may be either manually controlled by the vehicle operator in a mechanical system or under the control of a hydraulic or pneumatic actuator 16 which, in turn, is controlled by an onboard computer or microprocessor 18. The output of the master friction clutch 14 is provided to the input of a transmission assembly 20. The transmission assembly 20 may be either a mechanical transmission or an automated mechanical transmission (AMT) having a plurality of forward and reverse speeds or gear ratios which may be either selected by the vehicle operator in the case of a manual transmission or selected and controlled by the computer or microprocessor 18 in the case of automated mechanical transmission. In the latter case, the transmission assembly 20 includes an actuator assembly 22 having a plurality of electric, hydraulic or pneumatic actuators coupled to shift rails and shift forks which effect such gear ratio changes and selections.

An output shaft 23 of the transmission assembly 20 drives a prop shaft 24 which carries drive torque to a differential 26. The prop shaft 24 may include universal joints 25 at both ends to compensate for and permit static and dynamic misalignments between the output shaft 23 of the transmission assembly 20 and the input of the differential 26. Rear axles or half shafts 28 extend from the differential 26 and drive rear single or tandem tire and wheel assemblies 30. The power train assembly 10 also includes front tire and wheel assemblies 32 which are mounted for rotation and pivotal movement on a front axle 34. A steering linkage 36 provides angular or pivotal motion of the front tire and wheel assemblies 32 as commanded by a steering wheel 38.

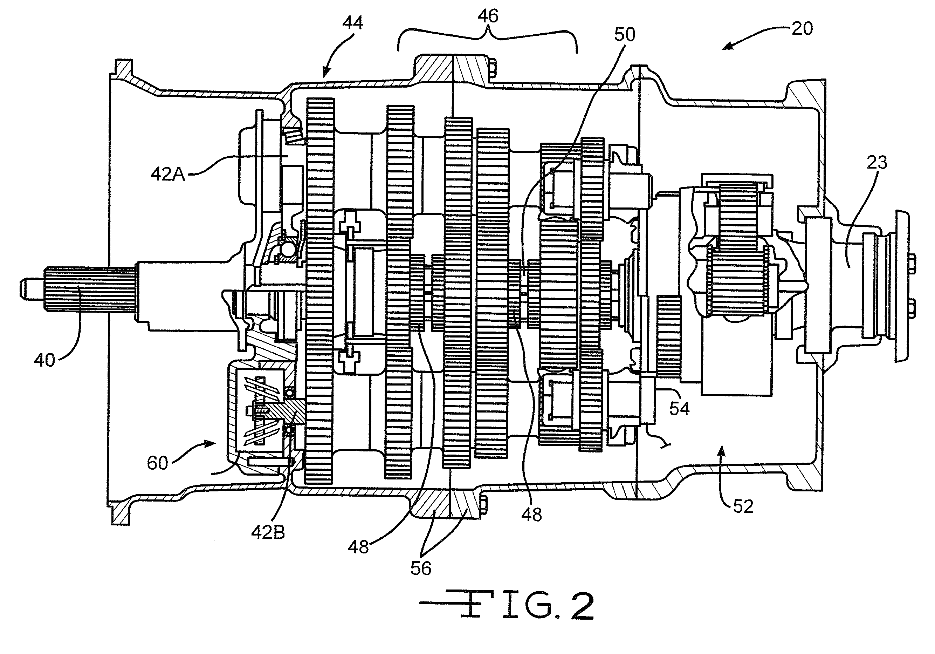

Referring now to Figure 2, the transmission assembly 20 includes an input shaft 40 which is coupled to and driven by the output of the master friction clutch 14 illustrated in Figure 1. The input shaft 40 provides drive torque to a first splitter transmission assembly 44 at the left or forward portion of the transmission assembly 20. The splitter assembly 44 provides two speed ratios which are utilized in tandem with the other gear and speed ratio changing assemblies of the transmission assembly 20. It will be noted that the transmission assembly 20 illustrated includes first and second layshafts or countershafts 42A and 42B upon which are secured and commonly rotate pluralities of gears. It will be appreciated that the invention disclosed herein is equally suitable for a transmission assembly utilizing a single countershaft or layshaft. The splitter assembly 44 operates in conjunction with the main transmission assembly 46 which may include three or four forward speeds or gear ratios. The illustrated main assembly 46 provides four forward speeds or gear ratios.

The selection of the gear ratios is achieved by a plurality of dog clutches 48 disposed about and splined to an intermediate output shaft 50. The dog clutches 48 are translated fore and aft along the intermediate output shaft 50 by shift forks which are, in turn, translated by a bank of electric, hydraulic or pneumatic actuators contained within the actuator assembly 22 illustrated in Figure 1. The intermediate output shaft 50 provides drive torque to a two speed, i.e., two gear ratio, planetary range change group or assembly 52. The output of the range change group or assembly 52 is provided to the output shaft or member 23, which may include a flange, suitable internal splines or other coupling feature as desired. Preferably, a speed sensor assembly 54 such as a variable reluctance or Hall effect sensor is disposed at one end of the countershaft 42A and provides data regarding the rotational speed thereof to the computer or microprocessor 18. The transmission assembly 20 also includes a multiple piece generally cylindrical cast and machined housing 56 which supports and protects the various components of the transmission assembly 20 as well as retaining lubricant (not illustrated) for the gears, shafts, bearings and other internal assemblies. At the forward or left portion of the transmission assembly 20 and secured to the countershaft 42A is a electrorheological inertia brake assembly 60.

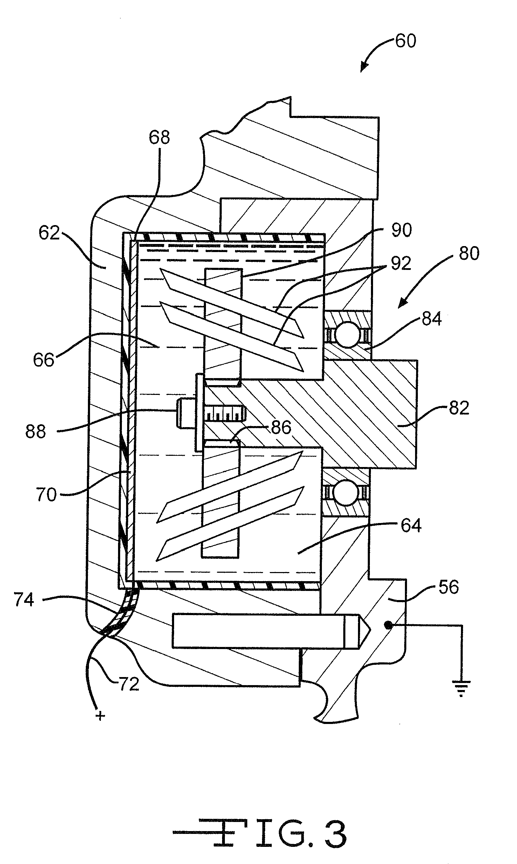

Referring now to Figure 3, the electrorheological inertia brake assembly 60 includes a bell-shaped housing 62 which forms, with a portion of the transmission housing 56, a cylindrical cavity 64. The cylindrical cavity 64 is filled with an electrorheological fluid 66. Extending over one internal circular face of the housing 62 and continuously along and around the tubular or cylindrical wall of the cavity 64 is a cup-shaped insulator 68 fabricated of a suitable rigid, rugged, electrically insulating material compatible with the electrorheological fluid 66. Nylon, polyvinyl chloride (PVC) and many other plastics are suitable. Extending across the internal circular face of the insulator 68 is a circular disk or electrode 70. The circular disk or electrode 70 is preferably fabricated of metal such as copper or aluminum or an electrically conductive plastic. Alternatively, the circular electrode 70 may be a layer of an electrically conductive material such as metal which has been deposited on the circular face of the insulator 68 by sputtering or other physical vapor deposition (PVD) process. The circular electrode 70 is connected to an electrical conductor 72 which extends through an insulator 74 to the outside of the housing 62.

Disposed within the cylindrical cavity 64 filled with the electrorheological fluid 66 is a friction assembly 80. The friction assembly 80 includes a shaft 82 which may be coupled to or be an extension of the countershaft 42B. A friction reducing bearing and a suitable fluid resistant seal 84 disposed between the shaft 82 and the adjacent portion of the transmission housing 56 support the countershaft 42B and provide a fluid tight seal therebetween to maintain the electrorheological fluid 66 within the cavity 64. At the end of the shaft 82 and secured by splines 86 or other suitable means and, for example, a threaded fastener 88 is a circular disk 90. The circular disk 90 may define friction increasing features such as apertures, convolutions and the like which increase its surface area and contact with the electrorheological fluid 66. The circular disk 90 preferably supports obliquely oriented blades, paddles or vanes 92 which extend from the disk 90 and further increase the frictional coupling between the circular disk 90 and the electrorheological fluid 66.

In operation, the electrorheological inertia brake assembly 60 provides improved transmission and vehicle operation by facilitating rapid gear shifts and therefore minimizes the time the master friction clutch 14 is disengaged during a shift. When a gearshift is commanded, either manually by the operator or automatically by the computer or microprocessor 18, the master friction clutch 14 is disengaged and the actuator assembly 22 disengages one of the clutches within the transmission assembly 20 such as a dog clutch 48. If an upshift has been commanded, the countershafts 42A and 42B and the next to be engaged gear(s) will be rotating faster than the dog clutch and the intermediate output shaft 50 to which they are about to be engaged. The computer or microprocessor 18, which receives the speed signal from the speed sensor 54 and other speed sensors (not illustrated) associated with, for example, the prime mover 12 and the propshaft 24, computes the speed to which the countershafts 42A and 42B should be reduced to facilitate engagement of the dog clutch 48 associated with the new gear and applies electrical power through the conductor 72 to the electrorheological fluid 66 to increase its viscosity and slow the countershafts 42A and 42B and gears. Preferably, the electrical power supplied to the electrorheological fluid 66 is controlled by a pulse width modulated (PWM) controller which increases its duty cycle and delivered power when the speed reduction required is large and reducing it as the speed difference reduces. When the speed sensor 54 provides data indicating that the desired speed has been achieved, the computer or microprocessor 17 issues a command which terminates the flow of electrical power to the electrorheological fluid 66, the dog clutch 48 is engaged and the master friction clutch 14 is engaged.

The foregoing disclosure is the best mode devised by the inventors for practicing this invention. It is apparent, however, that methods incorporating modifications and variations will be obvious to one skilled in the art of heavy duty multi-speed transmissions. Inasmuch as the foregoing disclosure is intended to enable one skilled in the pertinent art to practice the instant invention, it should not be construed to be limited thereby but should be construed to include such aforementioned obvious variations and be limited only by the spirit and scope of the following claims.

## Claims

1. An inertia brake for a multi-speed transmission, comprising, in combination:
a shaft adapted to be coupled to one of a transmission input shaft or countershaft,
a housing having internal surfaces and defining a cavity;
an electrorheological fluid disposed in said cavity;
an insulator disposed on a portion of said surfaces;
an electrode disposed in said cavity; and
a friction member coupled to said shaft.

2. The inertia brake of claim 1 further including a seal disposed between said shaft and said housing for maintaining said fluid in said cavity.

3. The inertia brake of claim 1 further including a bearing disposed between said shaft and said housing.

4. The inertia brake of claim 1 wherein said electrode is flat and secured to said insulator.

5. The inertia brake of claim 1 wherein said housing is coupled to an electrical ground.

6. The inertia brake of claim 1 further including friction enhancing blades secured to said friction member.

7. The inertia brake of claim 1 further including a multiple speed transmission having said input shaft and said countershaft.

8. An electrorheological inertia brake for a multi-speed transmission, comprising, in combination:
a shaft;
a housing defining a cavity;
an electrorheological fluid disposed in said cavity;
an insulator disposed in a portion of said cavity;
an electrode disposed in said cavity, and
means for enhancing drag coupled to said shaft;
whereby passage of an electrical current through said electrorheological fluid increases its viscosity and increases resistance to rotation by drag enhancing means.

9. The electrorheological inertia brake of claim 8 further including a seal disposed between said shaft and said housing for maintaining said fluid in said cavity.

10. The electrorheological inertia brake of claim 8 further including a bearing disposed between said shaft and said housing.

11. The electrorheological inertia brake of claim 8 wherein said electrode is flat and secured to said insulator.

12. The electrorheological inertia brake of claim 8 wherein said housing is coupled to an electrical ground.

13. The electrorheological inertia brake of claim 8 further including blades secured to said drag enhancing means.

14. The electrorheological inertia brake of claim 8 further including a multiple speed transmission having said input shaft and said countershaft.

15. An electrorheological inertia brake for a multi-speed transmission, comprising, in combination:
a shaft driven by a transmission countershaft,
a housing having internal surfaces and defining a cavity;
an electrorheological fluid disposed in said cavity;
an insulator disposed on a portion of said surfaces;
an electrode disposed on a portion of said insulator; and
a disk coupled to said shaft.

16. The electrorheological inertia brake of claim 15 further including a seal disposed between said shaft and said housing for maintaining said fluid in said cavity.

17. The electrorheological inertia brake of claim 15 further including a bearing disposed between said shaft and said housing.

18. The electrorheological inertia brake of claim 15 wherein said electrode is flat and secured to said insulator.

19. The electrorheological inertia brake of claim 15 wherein said housing is coupled to an electrical ground.

20. The electrorheological inertia brake of claim 15 further including drag enhancing members secured to said disk.
